# EUROPEAN PATENT SPECIFICATION

(11) **EP 3 385 555 B1**
(45) Date of publication and mention of the grant of the patent: **15.07.2020**
(21) Application number: 16870623.2
(22) Date of filing: 28.11.2016
(51) Int. Cl.: F16C 33/74, B60G 11/16, F16C 33/10, F16C 33/20, F16F 9/32, F16F 9/54

(54) **SYNTHETIC RESIN SLIDING BEARING**
KUNSTHARZGLEITLAGER
PALIER DE COULISSEMENT EN RÉSINE SYNTHÉTIQUE

(30) Priority: 02.12.2015 JP 2015236098
(43) Date of publication of application: 10.10.2018
(73) Proprietor: Oiles Corporation, Tokyo 108-0075 (JP)
(72) Inventor: KUROSE, Kouhei, Fujisawa-shi Kanagawa 252-0811 (JP); SAITO, Katsunori, Fujisawa-shi Kanagawa 252-0811 (JP)
(74) Representative: J A Kemp LLP
(86) International application number: PCT/JP2016/085246
(87) International publication number: WO 2017/094686

(56) References cited:
- JP-A- 2001 027 227
- JP-A- 2001 027 229
- JP-A- 2001 027 229
- JP-A- 2012 036 983
- JP-A- 2012 255 500
- JP-A- 2014 055 676
- JP-A- 2014 055 676
- US-A1- 2011 133 379
- US-A1- 2014 355 916
- US-A1- 2015 316 099

## Description

### TECHNICAL FIELD

The present invention relates to a synthetic resin-made sliding bearing, and more particularly to a synthetic resin-made sliding bearing which is suitably incorporated as a sliding bearing of a strut-type suspension (Macpherson type) in a four-wheeled motor vehicle.

### BACKGROUND ART

In general, among the strut-type suspensions used for front wheels of four-wheeled motor vehicles and having a structure in which a strut assembly incorporating a hydraulic shock absorber in an outer cylinder integrated with a main shaft is combined with a coil spring, there is a type in which when the strut assembly rotates together with the coil spring in the steering operation, the piston rod of the strut assembly rotates, and a type in which the piston rod does not rotate. In the strut-type suspension of either type, there are cases where, a bearing is used between a mounting mechanism of the strut assembly onto the vehicle body and an upper spring seat of the coil spring, so as to allow smooth rotation of the strut assembly.

### PRIOR ART DOCUMENTS

### PATENT DOCUMENTS

[Patent Document 1] JP-A-2004-225754
[Patent Document 2] JP-A-2009-257516
[Patent Document 3] JP-A-2010-31949
[Patent Document 4] JP-A-2010-53908
[Patent Document 5] JP-A-2014-55676 shows a synthetic resin-made sliding bearing according to the preamble of claims 1 and 3.

### SUMMARY OF THE INVENTION

### PROBLEMS THAT THE INVENTION IS TO SOLVE

In such a synthetic resin-made sliding bearing which is comprised of the synthetic resin-made upper casing, the synthetic resin-made lower casing superposed on the upper casing with a clearance so as to be rotatable about an axis of the upper casing, and the synthetic resin-made sliding bearing member disposed in the clearance between the upper casing and the lower casing, a labyrinth means making use of the clearance is provided on the inner peripheral side and the outer peripheral side between the upper casing and the lower casing to prevent the ingress of dust, muddy water, and the like.

However, with such a labyrinth means, under severe conditions there are cases where it is impossible to obtain a sufficient effect of preventing the ingress of dust, muddy water, and the like, and if the dust, muddy water, or the like enters the clearance between the upper casing and the lower casing, it becomes impossible to obtain smooth relative rotation of the lower casing with respect to the upper casing, possibly generating abnormal noise.

In addition, in the synthetic resin-made sliding bearing including a radial sliding bearing in addition to the labyrinth means, in a case where a fluctuating load or the like is applied in the radial direction to the lower casing relative to the upper casing and a radial displacement occurs to the lower casing owing to a radial inner clearance of the radial sliding bearing, surfaces which form a labyrinth allowing the clearance between the upper casing and the lower casing to communicate with the outside may possibly interfere with (press and contact) each other in the radial direction. As a result, there is a possibility that defects such as deformation, damage, and breakage may occur in these surfaces. Furthermore, in a case where relative sliding in the rotating direction (circumferential direction) occurs at the surfaces where interference has occurred, an increase in the frictional resistance may result, possibly lowering the sliding characteristics.

The present invention has been devised in view of the above-described aspects, and its object is to provide a synthetic resin-made sliding bearing which is capable of effectively preventing the ingress of dust, muddy water, and the like into the clearance between the upper casing and the lower casing and reducing the generation of abnormal noise due to the ingress of dust, muddy water, and the like, even under severe conditions and even if a fluctuating load or the like is applied to the lower casing in the radial direction relative to the upper casing and a radial displacement occurs to the lower casing owing to the radial inner clearance of the radial sliding bearing.

### MEANS FOR OVERCOMING THE PROBLEMS

A synthetic resin-made sliding bearing in accordance with the present invention comprises: a synthetic resin-made upper casing having an annular lower surface and a cylindrical side surface; a lower casing on which the upper casing is fitted and which has an annular upper surface, defining an annular space extending in a radial direction in cooperation with the annular lower surface of the upper casing, and a cylindrical side surface defining a tubular space extending in such a manner as to intersect the radial direction in cooperation with the cylindrical side surface of the upper casing; a sliding bearing member which has a thrust sliding bearing portion disposed in the annular space and a radial sliding bearing portion disposed in the tubular space with a radial inner clearance with respect to the upper casing and the lower casing; and an outer resilient seal member having an outer lip portion which is resiliently bend-deformable and is brought into contact with an inner peripheral side surface in the radial direction of the upper casing so as to allow an outer peripheral portion of the annular space to communicate with an outside between the upper casing and the lower casing and seal an outer peripheral-side clearance formed by mutually opposing surfaces of the upper casing and the lower casing, wherein the outer lip portion, which has a maximum diameter which is equal to or greater than the sum of the radial inner clearance and a diameter of the inner peripheral side surface in the radial direction of the upper casing at a portion of the inner peripheral side surface in the radial direction of the upper casing where the outer lip portion is in contact, is resiliently bent and is brought into contact with the inner peripheral side surface of the upper casing.

According to the synthetic resin-made sliding bearing in accordance with the present invention, since the outer resilient seal member is provided which has the outer lip portion which is resiliently bend-deformable and is brought into contact with the inner peripheral side surface in the radial direction of the upper casing so as to allow the outer peripheral portion of the annular space to communicate with the outside between the upper casing and the lower casing and seal the outer peripheral-side clearance formed between the mutually opposing surfaces of the upper casing and the lower casing, even under severe conditions it is possible to effectively prevent the ingress of dust, muddy water, and the like into at least the outer peripheral portion of the annular space through the outer peripheral-side clearance formed by the mutually opposing surfaces of the upper casing and the lower casing, and reduce the generation of abnormal noise due to the ingress of dust, muddy water, and the like at least at the thrust sliding bearing portion. Moreover, since the outer lip portion, which has the maximum diameter which is equal to or greater than the sum of the radial inner clearance and the diameter of the inner peripheral side surface of the upper casing at the portion of the inner peripheral side surface in the radial direction of the upper casing where the outer lip portion is in contact, is resiliently bent and is brought into contact with the inner peripheral side surface of the upper casing, even if a fluctuating load or the like is applied to the lower casing in the radial direction and a displacement in the radial direction occurs to the lower casing relative to the upper casing owing to the radial inner clearance, it is possible to reliably maintain the contact of the outer lip portion with the inner peripheral side surface. Even in the case of such a displacement in the radial direction, it is possible to maintain the sealability of the outer peripheral-side clearance by means of the outer lip portion. Thus, even if the lower casing is displaced in the radial direction with respect to the upper casing, it is possible to reliably prevent the ingress of dust, muddy water, and the like into at least the outer peripheral portion of the annular space, and reduce the generation of abnormal noise due to the ingress of dust, muddy water, and the like at least at the thrust sliding bearing portion.

With the synthetic resin-made sliding bearing in accordance with the present invention, in cases such as where the risk of the ingress of dust, muddy water, and the like into the annular space is comparatively small through the inner peripheral-side clearance allowing the inner peripheral portion of the annular space to communicate with the outside between the upper casing and the lower casing and formed by mutually opposing surfaces of the upper casing and the lower casing in comparison with the outer peripheral-side clearance allowing the outer peripheral portion of the annular space to communicate with the outside between the upper casing and the lower casing and formed by mutually opposing surfaces of the upper casing and the lower casing, it is possible to use a passage like a labyrinth having a radial width which is equal to or greater than half of the radial inner clearance so as to seal the inner peripheral-side clearance allowing the inner peripheral portion of the annular space to communicate with the outside between the upper casing and the lower casing and formed by mutually opposing surfaces of the upper casing and the lower casing. Otherwise, the synthetic resin-made sliding bearing in accordance with the present invention may further comprise: an inner resilient seal member having an inner lip portion which is resiliently bend-deformable and is brought into contact with an outer peripheral side surface in the radial direction of the upper casing so as to allow an inner peripheral portion of the annular space to communicate with the outside between the upper casing and the lower casing and seal an inner peripheral-side clearance formed by mutually opposing surfaces of the upper casing and the lower casing. In this case, the inner lip portion, which has a minimum diameter which is equal to or less than the difference between a diameter of the outer peripheral side surface in the radial direction of the upper casing at a portion of the outer peripheral side surface in the radial direction of the upper casing where the inner lip portion is in contact and the radial inner clearance, may be resiliently bent and brought into contact with the outer peripheral side surface of the upper casing.

On the other hand, in cases such as where the risk of the ingress of dust, muddy water, and the like into the annular space is comparatively small through the outer peripheral-side clearance allowing the outer peripheral portion of the annular space to communicate with the outside between the upper casing and the lower casing and formed by mutually opposing surfaces of the upper casing and the lower casing in comparison with the inner peripheral-side clearance allowing the inner peripheral portion of the annular space to communicate with the outside between the upper casing and the lower casing and formed by mutually opposing surfaces of the upper casing and the lower casing, and in cases such as where, on the contrary, the risk of the ingress of dust, muddy water, and the like into the annular space is large through the inner peripheral-side clearance allowing the inner peripheral portion of the annular space to communicate with the outside between the upper casing and the lower casing and formed by mutually opposing surfaces of the upper casing and the lower casing in comparison with the outer peripheral-side clearance allowing the outer peripheral portion of the annular space to communicate with the outside between the upper casing and the lower casing and formed by mutually opposing surfaces of the upper casing and the lower casing, the synthetic resin-made sliding bearing in accordance with the present invention may comprise: a synthetic resin-made upper casing which integrally has an upper annular plate-like portion, an outer cylindrical portion, and an inner cylindrical portion; a synthetic resin-made lower casing which is superposed on this upper casing with a clearance so as to be rotatable about an axis of the upper casing, and which integrally has a lower annular plate-like portion and a cylindrical portion; a synthetic resin-made sliding bearing member which integrally has a thrust sliding bearing portion disposed in an annular space between the upper annular plate-like portion and the cylindrical portion in a thrust direction in such a manner as to be brought, at an annular upper surface thereof, into contact with an annular lower surface of the upper annular plate-like portion and to be brought, at an annular lower surface thereof, into contact with an annular upper surface of the cylindrical portion, and a radial sliding bearing portion disposed in a tubular space between the inner cylindrical portion and the cylindrical portion in the radial direction with a radial inner clearance; and an inner resilient seal member having an inner lip portion which is resiliently bend-deformable and is brought into contact with an outer peripheral side surface of the inner cylindrical portion so as to seal a clearance between the outer peripheral side surface of the inner cylindrical portion and an inner peripheral side surface of the cylindrical portion, which clearance allows an inner peripheral portion of the annular space to communicate with the outside between the upper casing and the lower casing. In such a synthetic resin-made sliding bearing in accordance with the present invention, the inner lip portion, which has a minimum diameter which is equal to or less than the difference between a diameter of the outer peripheral side surface of the inner cylindrical portion at a portion of the outer peripheral side surface in the radial direction of the inner cylindrical portion where the inner lip portion is in contact and the radial inner clearance, may be resiliently bent and brought into contact with the outer peripheral side surface of the inner cylindrical portion. In this and other cases, it is possible to use a passage like a labyrinth having a radial width which is equal to or greater than half of the radial inner clearance so as to seal the outer peripheral-side clearance allowing the outer peripheral portion of the annular space to communicate with the outside between the upper casing and the lower casing and formed by mutually opposing surfaces of the upper casing and the lower casing.

Also in the synthetic resin-made sliding bearing in accordance with the present invention which includes such an inner resilient seal member having a lip portion, even under severe conditions it is possible to effectively prevent the ingress of dust, muddy water, and the like into at least the inner peripheral portion of the annular space through the inner peripheral-side clearance formed by the mutually opposing surfaces of the upper casing and the lower casing, and reduce the generation of abnormal noise due to the ingress of dust, muddy water, and the like at least at the thrust sliding bearing portion. Moreover, since the inner lip portion, which has the minimum diameter which is equal to or less than the difference between the radial inner clearance and the diameter of the outer peripheral side surface of the upper casing at the portion of the outer peripheral side surface in the radial direction of the upper casing where the inner lip portion is in contact, is resiliently bent and is brought into contact with the outer peripheral side surface of the upper casing, even if a fluctuating load or the like is applied to the lower casing in the radial direction and a displacement in the radial direction occurs to the lower casing relative to the upper casing owing to the radial inner clearance, it is possible to reliably maintain the contact of the inner lip portion with the outer peripheral side surface. Even in the case of such a displacement in the radial direction, it is possible to maintain the sealability of the inner peripheral-side clearance by means of the inner lip portion. Thus, even if the lower casing is displaced in the radial direction with respect to the upper casing, it is possible to reliably prevent the ingress of dust, muddy water, and the like into at least the inner peripheral portion of the annular space, and reduce the generation of abnormal noise due to the ingress of dust, muddy water, and the like at least at the thrust sliding bearing portion.

Furthermore, in the present invention, each of the outer resilient seal member and the inner resilient seal member may include, in addition to the respective corresponding resiliently deformable lip portion, a resilient seal body provided with such a lip portion and a core metal embedded in the resilient seal body.

In another preferred embodiment of the present invention, at least one of the annular lower surface of the outer resilient seal member and the annular lower surface of the inner resilient seal member has at least one resiliently deformable annular protruding surface which is brought into contact with the lower casing. If such a resiliently deformable annular protruding surface is provided, it is possible to improve the sealability with respect to the lower casing at the annular lower surface of the outer resilient seal member and the annular lower surface of the inner resilient seal member by the resiliently deform of the annular protruding surface, and it is possible to effectively prevent the ingress of dust, muddy water, and the like into at least the annular space accommodating the thrust sliding bearing portion, and more favorably reduce the generation of abnormal noise due to the ingress of dust, muddy water, and the like.

In the present invention, the sliding bearing member may integrally have the thrust sliding bearing portion and the radial sliding bearing portion, but may have the thrust sliding bearing portion and the radial sliding bearing portion as separate units.

The upper casing and the lower casing may be formed of a synthetic resin including at least one of polyacetal resin, polyamide resin, thermoplastic polyester resin, polyolefin resin, polycarbonate resin, and fluororesin. The sliding bearing member may be formed of a synthetic resin including at least one of polyacetal resin, polyamide resin, thermoplastic polyester resin, polyolefin resin, and fluororesin. As for each of the upper casing and the lower casing, a synthetic resin similar to the synthetic resin constituting the sliding bearing member can be used, but particularly a synthetic resin which exhibits satisfactory friction characteristics when combined with the synthetic resin used for the sliding bearing member is used. As for the sliding bearing member, particularly the thrust sliding bearing portion, and the upper casing and the lower casing, it is possible to cite by way of example the following: a combination of polyacetal resin and polyamide resin; a combination of a polyolefin resin, particularly polyethylene resin, and polyacetal resin; a combination of polyacetal resin and a thermoplastic polyester resin, particularly polybutylene terephthalate resin; and a combination of polyacetal resin and polyacetal resin.

### ADVANTAGES OF THE INVENTION

According to the present invention, it is possible to provide a synthetic resin-made sliding bearing which is capable of effectively preventing the ingress of dust, muddy water, and the like into the clearance between the upper casing and the lower casing and reducing the generation of abnormal noise due to the ingress of dust, muddy water, and the like, even under severe conditions and even if a fluctuating load or the like is applied to the lower casing in the radial direction relative to the upper casing and a radial displacement occurs to the lower casing owing to the radial inner clearance of the radial sliding bearing.

### BRIEF DESCRIPTION OF THE DRAWINGS

Fig. 1 is an explanatory front cross-sectional view of an embodiment of the invention;
Fig. 2 is an explanatory front cross-sectional view of an upper casing shown in Fig. 1;
Fig. 3 is an explanatory cross-sectional view, taken in the direction of arrows along line III - III shown in Fig. 4, of a lower casing shown in Fig. 1;
Fig. 4 is an explanatory plan view of the lower casing shown in Fig. 1;
Fig. 5 is an explanatory enlarged front cross-sectional view of a right portion of the embodiment shown in Fig. 1;
Fig. 6 is an explanatory enlarged front cross-sectional view of a left portion of the embodiment shown in Fig. 1;
Fig. 7 is an explanatory plan view of a thrust sliding bearing member shown in Fig. 1;
Fig. 8 is an explanatory cross-sectional view, taken in the direction of arrows along line VIII - VIII shown in Fig. 7, of the thrust sliding bearing member shown in Fig. 1;
Fig. 9 is an explanatory partial front cross-sectional view of an outer resilient seal member shown in Fig. 1;
Fig. 10 is an explanatory partial front cross-sectional view of an inner resilient seal member shown in Fig. 1; and
Fig. 11 is an explanatory cross-sectional view of an embodiment in which the embodiment shown in Fig. 1 is incorporated in a strut-type suspension assembly.

### MODE FOR CARRYING OUT THE INVENTION

Hereafter, a more detailed description will be given of the mode for carrying out the invention on the basis of a preferred embodiment illustrated in the drawings. It should be noted that the present invention is not limited to the embodiment.

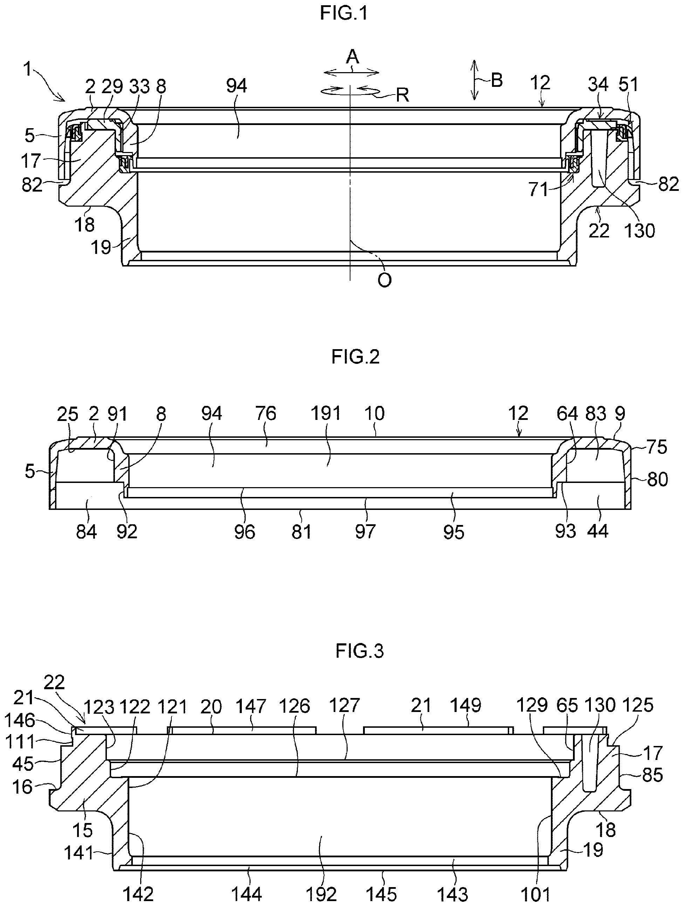

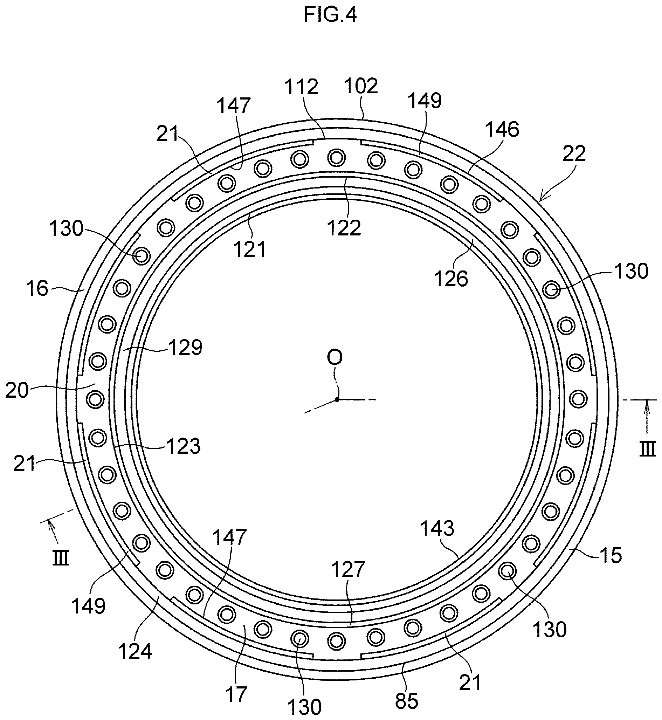

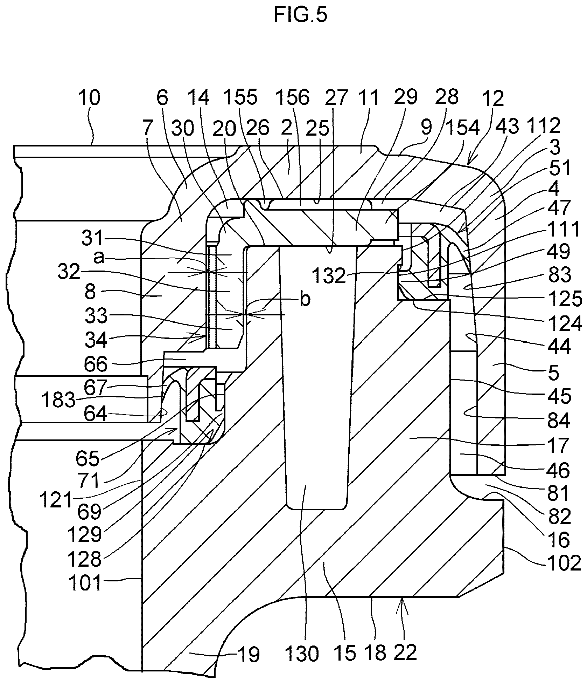

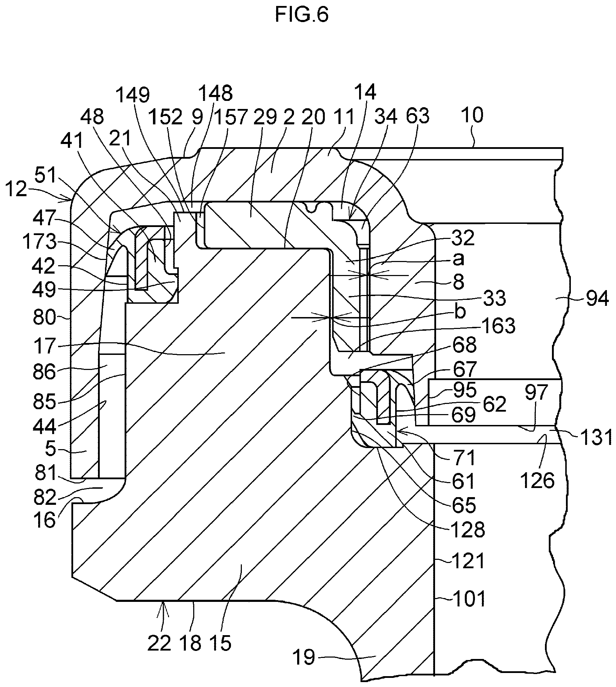

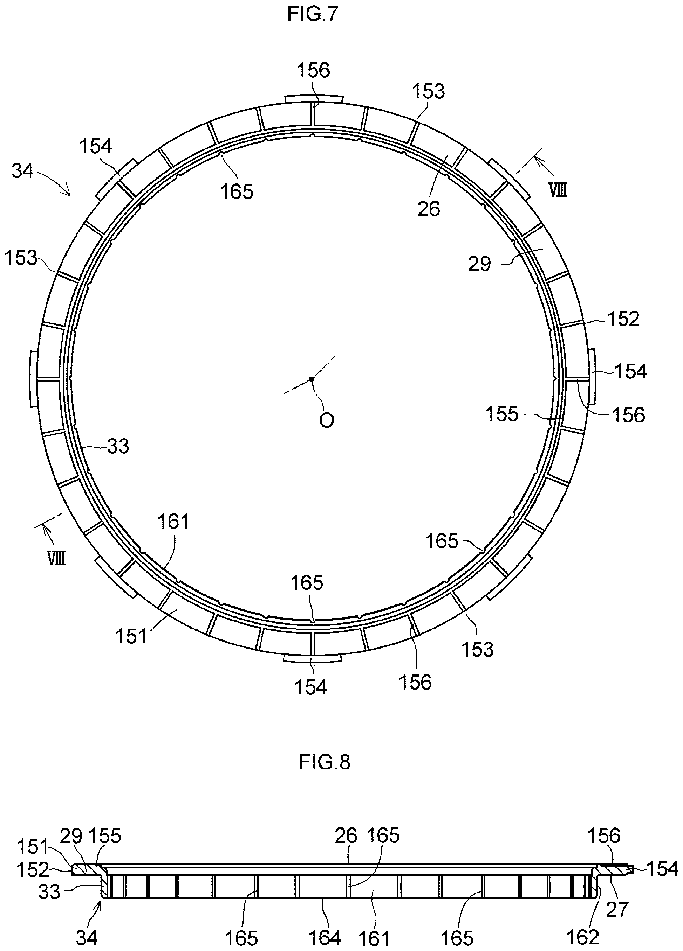

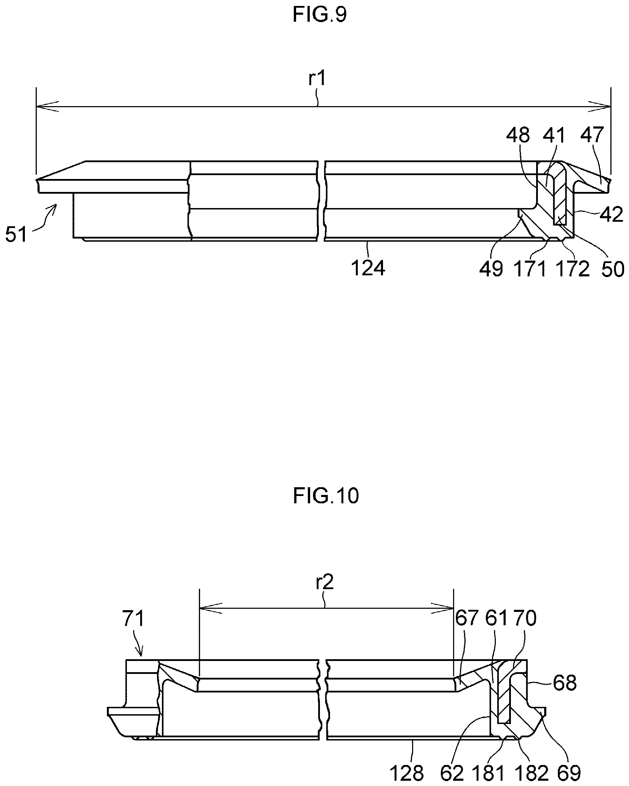

In Figs. 1 to 10, a synthetic resin-made sliding bearing 1 in accordance with this embodiment is comprised of a synthetic resin-made upper casing 12 which integrally has an upper annular plate-like portion 2, an outer cylindrical portion 5 which, at an upper annular end portion 4 thereof in a vertical direction B, i.e., a thrust direction, is integrally formed on an outer annular end portion 3 in a radial direction A of the upper annular plate-like portion 2 and is suspended from that outer annular end portion 3, an inner cylindrical portion 8 which, at an upper annular end portion 7 thereof in the vertical direction B, is integrally formed on an inner annular end portion 6 in the radial direction A of the upper annular plate-like portion 2 and is suspended from that inner annular end portion 6, and an annular projecting portion 11 having a flat upper surface 10 formed integrally on an annular upper surface 9 in the vertical direction B of the upper annular plate-like portion 2; a synthetic resin-made lower casing 22 which is superposed on the upper casing 12 with a clearance 14 therebetween in the radial direction A and the vertical direction B so as to be rotatable in a direction R about an axis O of the upper casing 12, and which integrally has a lower annular plate-like portion 15, a cylindrical portion 17 formed integrally on an annular upper surface 16 in the vertical direction B of the lower annular plate-like portion 15 and standing upright from that annular upper surface 16 in the vertical direction B, a suspended cylindrical portion 19 formed integrally on the inner side in the radial direction A of an annular lower surface 18 in the vertical direction B of the lower annular plate-like portion 15 and suspended from that annular lower surface 18, and a plurality of projecting portions 21 formed integrally on an outer edge portion in the radial direction A of an annular upper surface 20 in the vertical direction B of the cylindrical portion 17 in such a manner as to be spaced apart from each other in the direction R; a synthetic resin-made sliding bearing member 34 which integrally has an annular plate-like thrust sliding bearing portion 29 disposed in a circular annular space 28 between an annular lower surface 25 in the vertical direction B of the upper annular plate-like portion 2 and the annular upper surface 20 in the vertical direction B in the clearance 14 such that a circular annular upper surface 26 thereof in the vertical direction B is brought into contact with the annular lower surface 25 so as to be rotatable in the direction R, and such that an annular lower surface 27 thereof in the vertical direction B is brought into contact with the annular upper surface 20, and a cylindrical radial sliding bearing portion 33 which, at an upper annular end portion 31 thereof in the vertical direction B, is integrally formed on an inner annular end portion 30 in the radial direction A of the thrust sliding bearing portion 29 in such a manner as to be suspended from that inner annular end portion 30, and is disposed in a cylindrical tubular space 32 between the inner cylindrical portion 8 and the cylindrical portion 17 in the radial direction A with a radial inner clearance [= 2 . (a + b)]; an outer resilient seal member 51 which integrally has a cylindrical resilient seal body 41, a circular annular outer lip portion 47 in the radial direction A which is resiliently bend-deformable and is integrally formed on a cylindrical outer surface 42 in the radial direction A of the resilient seal body 41 in such a manner as to be brought into contact with an inner peripheral side surface 44 in the radial direction A of the outer cylindrical portion 5 so as to seal an outer peripheral-side clearance 46 in the radial direction A between the inner peripheral side surface 44 and an outer peripheral side surface 45 in the radial direction A of the cylindrical portion 17, which clearance 46 allows an outer peripheral portion 43 in the radial direction A of the annular space 28 in the clearance 14 to communicate with the outside between the upper casing 12 and the lower casing 22, an inner circular annular lip portion 49 in the radial direction A which is integrally formed on a cylindrical inner surface 48 in the radial direction A of the resilient seal body 41, and a core metal 50 embedded in the resilient seal body 41; and an inner resilient seal member 71 which integrally has a cylindrical resilient seal body 61, a circular annular inner lip portion 67 in the radial direction A which is resiliently bend-deformable and is integrally formed on a cylindrical inner surface 62 in the radial direction A of the resilient seal body 61 in such a manner as to be brought into contact with an outer peripheral side surface 64 in the radial direction A of the inner cylindrical portion 8 so as to seal a clearance 66 between the outer peripheral side surface 64 and an inner peripheral side surface 65 in the radial direction A of the cylindrical portion 17, which clearance 66 allows an inner peripheral portion 63 in the radial direction A of the annular space 28 in the clearance 14 to communicate with the outside between the upper casing 12 and the lower casing 22, an outer circular annular lip portion 69 in the radial direction A which is integrally formed on a cylindrical outer surface 68 in the radial direction A of the resilient seal body 61, and a core metal 70 embedded in the resilient seal body 61.

The upper annular plate-like portion 2 includes, in addition to the annular upper surface 9, a cylindrical outer peripheral side surface 75 in the radial direction A connected continuously to the annular upper surface 9 on the outer side in the radial direction A and an annular inner peripheral side surface 76 in the radial direction A having a curved surface and connected continuously to the annular upper surface 9 on the inner side in the radial direction A.

In the outer cylindrical portion 5 having a cylindrical outer peripheral side surface 80 in the radial direction A connected continuously and flush with the outer peripheral side surface 75, its annular lower end surface 81 in the vertical direction B is opposed to the annular upper surface 16 in the vertical direction B with an annular clearance 82, and the inner peripheral side surface 44 includes a truncated conical inner peripheral side surface 83 in the radial direction A to which the annular lower surface 25 is continuously connected and with which the lip portion 47 is brought into contact, as well as a cylindrical inner peripheral side surface 84 in the radial direction A which, at the circular annular upper end in the vertical direction B, is continuously connected to a circular annular lower end in the vertical direction B of the inner peripheral side surface 83 and, at an annular lower end in the vertical direction B, is continuously connected to an annular inner edge in the radial direction A of the annular lower end surface 81, the inner peripheral side surface 84 being opposed to a cylindrical outer peripheral side surface 85 of the outer peripheral side surface 45 with a cylindrical clearance 86 in the radial direction A.

In the inner cylindrical portion 8, the outer peripheral side surface 64 includes a cylindrical outer peripheral side surface 91 in the radial direction A which is continuously connected to the annular lower surface 25 and a cylindrical outer peripheral side surface 92 which is smaller in diameter than the outer peripheral side surface 91 and with which the lip portion 67 is brought into contact. The outer peripheral side surface 91 at its circular annular lower edge in the vertical direction B is continuously connected to a circular annular outer edge in the radial direction A of a circular annular flat lower surface 93, while the outer peripheral side surface 92 at its circular annular upper edge in the vertical direction B is continuously connected to an circular annular inner edge in the radial direction A of the flat lower surface 93. In addition to the outer peripheral side surface 64 and the flat lower surface 93, the inner cylindrical portion 8 further includes a cylindrical inner peripheral side surface 94 in the radial direction A connected continuously to the inner peripheral side surface 76; a cylindrical inner peripheral side surface 95 in the radial direction A which is greater in diameter than the inner peripheral side surface 94; a circular annular flat lower surface 96 in the vertical direction B which, at a circular annular inner edge in the radial direction A, is continuously connected to a circular annular lower edge in the vertical direction B of the inner peripheral side surface 94 and, at a circular annular outer edge in the radial direction A, is continuously connected to a circular annular upper edge in the vertical direction B of the inner peripheral side surface 95; and a circular annular lower end surface 97 in the vertical direction B connected continuously to the outer peripheral side surface 92 and to the inner peripheral side surface 95.

In addition to the annular upper surface 16 and the annular lower surface 18, the lower annular plate-like portion 15 includes a cylindrical inner peripheral side surface 101 in the radial direction A and a cylindrical outer peripheral side surface 102 in the radial direction A disposed flush with respect to the outer peripheral side surface 80.

In the cylindrical portion 17, the outer peripheral side surface 45 includes, in addition to the outer peripheral side surface 85, a cylindrical outer peripheral side surface 111 in the radial direction A with which the elastically deformable lip portion 49 is brought into contact and is smaller in diameter than the outer peripheral side surface 85, as well as a cylindrical outer peripheral side surface 112 in the radial direction A which is smaller in diameter than the outer peripheral side surface 85 and is greater in diameter than the outer peripheral side surface 111. The inner peripheral side surface 65 includes a cylindrical inner peripheral side surface 121 in the radial direction A connected continuously and flush with the inner peripheral side surface 101, a cylindrical inner peripheral side surface 122 in the radial direction A which is greater in diameter than the inner peripheral side surface 121 and with which the elastically deformable lip portion 69 is brought into contact, and a cylindrical inner peripheral side surface 123 in the radial direction A which is greater in diameter than the inner peripheral side surface 122, is continuously connected to the annular upper surface 20, and is opposed to the outer peripheral side surface 91 in the radial direction A so as to form the tubular space 32 in cooperation with the concentric outer peripheral side surface 91. The cylindrical portion 17 includes, in addition to the outer peripheral side surface 45 and the inner peripheral side surface 65, a circular annular flat upper surface 125 in the vertical direction B which is continuously connected to a circular annular upper edge in the vertical direction B of the outer peripheral side surface 85 at a circular annular outer edge thereof in the radial direction A, and is continuously connected to a circular annular lower edge in the vertical direction B of the outer peripheral side surface 111 at a circular annular inner edge thereof in the radial direction A, and with which an annular lower surface 124 of the resilient seal body 41 is brought into contact; a circular annular flat upper surface 126 connected continuously to a circular annular upper edge in the vertical direction B of the inner peripheral side surface 121 at a circular annular inner edge thereof in the radial direction A; an annular upper surface 127 with an inclined surface which is continuously connected to a circular annular upper edge in the vertical direction B of the inner peripheral side surface 122 at a circular annular inner edge thereof in the radial direction A and connected continuously to a circular annular lower edge in the vertical direction B of the inner peripheral side surface 123 at a circular annular outer edge thereof in the radial direction A; a circular annular recessed surface 129 which is disposed between the inner peripheral side surface 122 and a circular annular outer edge in the radial direction A of the flat upper surface 126 in the radial direction A, and with which an annular lower surface 128 of the resilient seal body 61 is brought into contact; and a plurality of columnar or triangular prism-like recesses 130 which are open at the annular upper surface 20 and arranged in such a manner as to be spaced apart from each other at equal intervals in the direction R so as to attain such as light weight and uniform wall thickness of the cylindrical portion 17 and the like. The flat upper surface 126 is opposed to the lower end surface 97 with a clearance 131 in the vertical direction B, and each of the outer peripheral side surface 111 and the outer peripheral side surface 112 is continuously connected to a circular annular inner edge and a circular annular outer edge in the radial direction A of a flat lower surface 132 in the vertical direction B of the cylindrical portion 17 at an circular annular upper edge and a circular annular lower edge thereof.

The suspended cylindrical portion 19 includes a cylindrical outer peripheral side surface 141 in the radial direction A connected continuously to the annular lower surface 18; a cylindrical inner peripheral side surface 142 in the radial direction A connected continuously and flush with the inner peripheral side surface 101; a cylindrical inner peripheral side surface 143 in the radial direction A smaller in diameter than the inner peripheral side surface 142; a cylindrical inner peripheral side surface 144 in the radial direction A greater in diameter than the inner peripheral side surface 142; and a circular annular lower end surface 145 connected continuously to the outer peripheral side surface 141 and the inner peripheral side surface 144.

Each of the projecting portions 21 includes a circular arc-shaped outer peripheral side surface 146 in the radial direction A connected continuously and flush with the outer peripheral side surface 112, a circular arc-shaped inner peripheral side surface 147 in the radial direction A connected continuously with the annular upper surface 20, and a circular arc-shaped upper end surface 149 in the vertical direction B connected continuously to the outer peripheral side surface 146 and the inner peripheral side surface 147 and opposed to the annular lower surface 25 in the vertical direction B with a clearance 148 therebetween.

The thrust sliding bearing portion 29 includes a disk-like main body 151 having the circular annular upper surface 26; a plurality of projecting portions 154 which are integrally formed on a cylindrical outer peripheral side surface 152 in the radial direction A of the disk-like main body 151 in such a manner as to project from that outer peripheral side surface 152 outwardly in the radial direction A, and define a plurality of recesses 153 spaced apart from each other in the direction R for receiving the respective projecting portions 21; a circular annular groove 155 formed on the circular annular upper surface 26; a plurality of radial grooves 156 which are formed on the circular annular upper surface 26 in such a manner as to be spaced apart from each other in the direction R, and which are open, at one end thereof, to the circular annular groove 155 and, at the other end thereof, to the outer peripheral side surface 152. The circular annular groove 155 and the radial grooves 156 serve as reservoirs for a lubricant such as grease, and the outer peripheral side surface 152 is opposed to the inner peripheral side surface 147 in the radial direction A with a width of a clearance 157 in the radial direction A which is equal to or greater than half of the radial inner clearance [= 2 · (a + b)].

The radial sliding bearing portion 33, which is constituted by a cylindrical body, includes a cylindrical inner peripheral 161 in the radial direction A opposed to the outer peripheral side surface 91 with a cylindrical clearance of a width a in the radial direction A; a cylindrical outer peripheral side surface 162 in the radial direction A opposed to the inner peripheral side surface 123 with a cylindrical clearance of a width b in the radial direction A; a circular annular lower end surface 164 in the vertical direction B opposed to the annular upper surface 127 with an inclined surface in the vertical direction B with a clearance 163 of the clearance 66; and axial grooves 165 which are formed on the inner peripheral surface 161 in such a manner as to be spaced apart from each other at equal intervals in the direction R, and which are open at the upper annular end portion 31 on the upper side in the vertical direction B and are open at the lower end surface 164 on the lower side in the vertical direction B. The axial grooves 165 serve as reservoirs for a lubricant such as grease in the same way as the circular annular groove 155 and the radial grooves 156.

In the outer resilient seal member 51, its annular lower surface 124 has resiliently deformable annular protruding surfaces 171 and 172 arranged concentrically and is resiliently brought into contact with the flat upper surface 125 through the annular protruding surfaces 171 and 172. The lip portion 47, which is formed integrally with the resilient seal body 41 at the cylindrical outer surface 42, projects from the cylindrical outer surface 42 obliquely downwardly outwardly in the radial direction A and the vertical direction B, and the lip portion 49, which is formed integrally with the resilient seal body 41 at the cylindrical inner surface 48, projects from the cylindrical inner surface 48 obliquely upwardly inwardly in the radial direction A and the vertical direction B. The lip portion 47 in a state of not being resiliently bent without being brought into contact with the inner peripheral side surface 83 has a maximum diameter r1 which is equal to or greater than the sum of the radial inner clearance [= 2 . (a + b)] and the diameter of the inner peripheral side surface 83 at a portion 173 of the inner peripheral side surface 83 in the radial direction A where the lip portion 47 is in contact. The lip portion 47 having such a maximum diameter r1 is resiliently bent so as to be reduced in diameter and is in contact with the inner peripheral side surface 83.

In the inner resilient seal member 71, its annular lower surface 128 has resiliently deformable annular protruding surfaces 181 and 182 arranged concentrically and is resiliently brought into contact with the recessed surface 129 through the annular protruding surfaces 181 and 182. The lip portion 67, which is formed integrally with the resilient seal body 61 at the cylindrical inner surface 62, projects from the cylindrical inner surface 62 obliquely downwardly inwardly in the radial direction A and the vertical direction B, and the lip portion 69, which is formed integrally with the resilient seal body 61 at the cylindrical outer surface 68, projects from the cylindrical outer surface 68 obliquely upwardly outwardly in the radial direction A and the vertical direction B. The lip portion 67 in a state of not being resiliently bent without being brought into contact with the outer peripheral side surface 92 has a minimum diameter r2 which is equal to or less than the difference between the diameter of the outer peripheral side surface 92 at a portion 183 of the outer peripheral side surface 92 in the radial direction A where the lip portion 67 is in contact and the radial inner clearance [= 2 . (a + b)]. The lip portion 67 having such a minimum diameter r2 is resiliently bent so as to be enlarged in diameter and is in contact with the outer peripheral side surface 64.

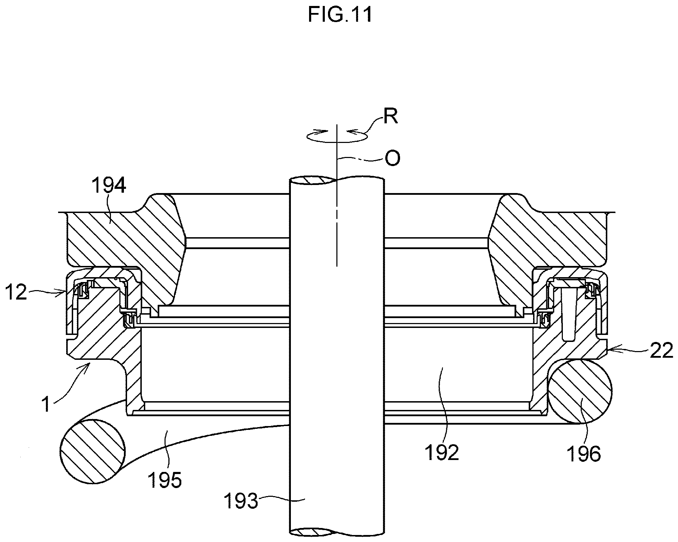

The synthetic resin-made sliding bearing 1 includes the upper casing 12 having the annular lower surface 25 and the outer peripheral side surface 91 serving as a cylindrical side surface; the lower casing 22 on which the upper casing 12 is fitted and which has the annular upper surface 20, defining the annular space 28 extending in the radial direction A in cooperation with the annular lower surface 25, and the inner peripheral side surface 123 serving as a cylindrical side surface defining the tubular space 32 extending in the vertical direction B in such a manner as to intersect the radial direction A in cooperation with the outer peripheral side surface 91; the sliding bearing member 34 which has the thrust sliding bearing portion 29 disposed in the annular space 28 and the radial sliding bearing portion 33 disposed in the tubular space 32 with the radial inner clearance [= 2 . (a + b)] with respect to the outer peripheral side surface 91 of the upper casing 12 and the inner peripheral side surface 123 of the lower casing 22; the outer resilient seal member 51 having the outer lip portion 47 which is resiliently bend-deformable and is brought into contact with the inner peripheral side surface 83 so as to allow the outer peripheral portion 43 of the annular space 28 to communicate with the outside between the upper casing 12 and the lower casing 22 through the clearance 82 and seal the outer peripheral-side clearance 46 formed between the inner peripheral side surface 44 and the outer peripheral side surface 45 which are mutually opposing surfaces of the upper casing 12 and the lower casing 22; and the inner resilient seal member 71 having the inner lip portion 67 which is resiliently bend-deformable and is brought into contact with the outer peripheral side surface 92 so as to allow the inner peripheral portion 63 of the annular space 28 to communicate with the outside between the upper casing 12 and the lower casing 22 through the clearance 131 and seal the inner peripheral-side clearance 66 formed between the outer peripheral side surface 64 and the inner peripheral side surface 65 which are mutually opposing surfaces of the upper casing 12 and the lower casing 22. As shown in Fig. 11, this synthetic resin-made sliding bearing 1 is adapted to be installed between a mounting mechanism 194 for mounting the strut assembly to the vehicle body and a coil spring 195 such that a piston rod 193 of the strut assembly is disposed by being passed through a through hole 191 defined by the inner peripheral side surfaces 76, 94, and 95 of the upper casing 12 and a through hole 192 concentric with the through hole 191 and defined by the inner peripheral side surfaces 101, 121, 142, and 143 of the lower casing 22, and such that an upper end portion 196 of the coil spring 195 is seated on the annular lower surface 18 serving as an upper spring seat with the upper surface 10 and the inner peripheral side surface 94 brought into close contact with the mounting mechanism 194. In such a synthetic resin-made sliding bearing 1, when the coil spring 195 is rotated about the axis O in the R direction by the steering operation, the upper casing 12 is similarly rotated relatively in the R direction with respect to the lower casing 22. This relative rotation of the upper casing 12 in the direction R is effected smoothly by the rotation of the annular lower surface 25 with respect to the circular annular upper surface 26 through the lubricant and by the rotation of the outer peripheral side surface 91 with respect to the inner peripheral surface 161 through the lubricant, so that the steering operation is performed without resistance.

Moreover, according to the synthetic resin-made sliding bearing 1, since the outer resilient seal member 51 is provided which has the outer lip portion 47 which is resiliently bend-deformable and is brought into contact with the inner peripheral side surface 83 in the radial direction A of the upper casing 12 so as to allow the outer peripheral portion 43 of the annular space 28 to communicate with the outside between the upper casing 12 and the lower casing 22 and seal the outer peripheral-side clearance 46 formed between the mutually opposing inner peripheral side surface 44 and outer peripheral side surface 45 of the upper casing 12 and the lower casing 22, even under severe conditions it is possible to effectively prevent the ingress of dust, muddy water, and the like into the outer peripheral portion 43 of the annular space 28 through the outer peripheral-side clearance 46 formed between the inner peripheral side surface 44 and the outer peripheral side surface 45, and reduce the generation of abnormal noise due to the ingress of dust, muddy water, and the like at the thrust sliding bearing portion 29. Moreover, since the outer lip portion 47, which has the maximum diameter r1 which is equal to or greater than the sum of the radial inner clearance [= 2 . (a + b)] and the diameter of the inner peripheral side surface 83 of the upper casing 12 at the portion 173 of the inner peripheral side surface 83 in the radial direction A of the upper casing 12 where the outer lip portion 47 is in contact, is resiliently bent and is brought into contact with the inner peripheral side surface 83 of the upper casing 12, even if a fluctuating load or the like is applied to the lower casing 22 in the radial direction A and a displacement in the radial direction A occurs to the lower casing 22 relative to the upper casing 12 owing to the radial inner clearance [= 2 . (a + b)], it is possible to reliably maintain the contact of the outer lip portion 47 with the inner peripheral side surface 83. Even in the case of such a displacement in the radial direction A, it is possible to maintain the sealability of the outer peripheral-side clearance 46 by means of the outer lip portion 47. Thus, even if the lower casing 22 is displaced in the radial direction A with respect to the upper casing 12, it is possible to reliably prevent the ingress of dust, muddy water, and the like into the outer peripheral portion 43 of the annular space 28, and reduce the generation of abnormal noise due to the ingress of dust, muddy water, and the like at the thrust sliding bearing portion 29.

In addition, according to the synthetic resin-made sliding bearing 1, since the inner resilient seal member 71 having the lip portion 67 is provided, even under severe conditions, it is possible to effectively prevent the ingress of dust, muddy water, and the like into the tubular space 32 and the inner peripheral portion 63 of the annular space 28 through the clearance 66 formed between the outer peripheral side surface 64 of the inner cylindrical portion 8 and the inner peripheral side surface 65 of the cylindrical portion 17 and communicating with the inner side between the upper casing 12 and the lower casing 22, and reduce the generation of abnormal noise due to the ingress of dust, muddy water, and the like at the thrust sliding bearing portion 29 and the radial sliding bearing portion 33. Moreover, since the inner lip portion 67, which has the minimum diameter r2 which is equal to or less than the difference between the diameter of the outer peripheral side surface 92 of the upper casing 12 at the portion 183 of the outer peripheral side surface 92 in the radial direction A of the upper casing 12 where the inner lip portion 67 is in contact and the radial inner clearance [= 2 . (a + b)], is resiliently bent and is brought into contact with the outer peripheral side surface 92 of the upper casing 12, even if a fluctuating load or the like is applied to the lower casing 22 in the radial direction A and a displacement in the radial direction A occurs to the lower casing 22 relative to the upper casing 12 owing to the radial inner clearance [= 2 · (a + b)], it is possible to reliably maintain the contact of the inner lip portion 67 with the outer peripheral side surface 92. Even in the case of such a displacement in the radial direction A, it is possible to maintain the sealability of the inner peripheral-side clearance 66 by means of the inner lip portion 67. Thus, even if the lower casing 22 is displaced in the radial direction A with respect to the upper casing 12, it is possible to reliably prevent the ingress of dust, muddy water, and the like into the tubular space 32 and the inner peripheral portion 63 of the annular space 28, and reduce the generation of abnormal noise due to the ingress of dust, muddy water, and the like at the radial sliding bearing portion 33 and the thrust sliding bearing portion 29.

In addition, according to the synthetic resin-made sliding bearing 1, since the annular lower surface 124 of the outer resilient seal member 51 has the resiliently deformable annular protruding surfaces 171 and 172, and the annular lower surface 128 of the inner resilient seal member 71 has the resiliently deformable annular protruding surfaces 181 and 182, it is possible to improve the sealability at the annular lower surface 124 of the outer resilient seal member 51 and the annular lower surface 128 of the inner resilient seal member 71 by virtue of the resilient deformation of those annular protruding surfaces 171 and 172 and annular protruding surfaces 181 and 182, so that it is possible to more effectively prevent the ingress of dust, muddy water, and the like into the annular space 28 and the tubular space 32 respectively accommodating the thrust sliding bearing portion 29 and the radial sliding bearing portion 33, and more favorably reduce the generation of abnormal noise due to the ingress of dust, muddy water, and the like.

### DESCRIPTION OF REFERENCE NUMERALS

- 1:: synthetic resin-made sliding bearing
- 2:: upper annular plate-like portion
- 3:: outer annular end portion
- 4, 7, 31:: upper annular end portion
- 5:: outer cylindrical portion
- 6, 30:: inner annular end portion
- 8:: inner cylindrical portion
- 9, 16, 20:: annular upper surface
- 10:: upper surface
- 11:: annular projecting portion
- 12:: upper casing
- 14, 46, 66:: clearance
- 15:: lower annular plate-like portion
- 17:: cylindrical portion
- 18, 25, 27:: annular lower surface
- 19:: suspended cylindrical portion
- 21:: projecting portion
- 22:: lower casing
- 26:: circular annular upper surface
- 28:: annular space
- 29:: thrust sliding bearing portion
- 32:: tubular space
- 33:: radial sliding bearing portion
- 34:: sliding bearing member
- 41, 61:: resilient seal body
- 42:: cylindrical outer surface
- 43:: outer peripheral portion
- 44, 65:: inner peripheral side surface
- 45, 64:: outer peripheral side surface
- 47, 49, 67, 69:: lip portion
- 48, 62:: cylindrical inner surface
- 50, 70:: core metal
- 51:: outer resilient seal member
- 63:: inner peripheral portion
- 68:: outer peripheral portion
- 71:: inner resilient seal member

## Claims

1. A synthetic resin-made sliding bearing (1) comprising:
a synthetic resin-made upper casing (12) having an annular lower surface (25) and a cylindrical side surface;
a synthetic resin-made lower casing (22) on which said upper casing (12) is fitted and which has an annular upper surface, defining an annular space extending in a radial direction in cooperation with the annular lower surface (25) of said upper casing (12), and a cylindrical side surface defining a tubular space extending in such a manner as to intersect the radial direction in cooperation with the cylindrical side surface of said upper casing (12);
a synthetic resin-made sliding bearing member (34) which has a thrust sliding bearing portion (29) disposed in the annular space and a radial sliding bearing portion (33) disposed in the tubular space with a radial inner clearance with respect to said upper casing (12) and said lower casing (22); and
an outer resilient seal member (51) having an outer lip portion (47) which is resiliently bend-deformable and is brought into contact with an inner peripheral side surface (44) in the radial direction of said upper casing (12) so as to allow an outer peripheral portion of the annular space to communicate with an outside between said upper casing (12) and said lower casing (22) and seal an outer peripheral-side clearance formed by mutually opposing surfaces of said upper casing (12) and said lower casing (22),
**characterized in that** the outer lip portion (47), which has a maximum diameter which is equal to or greater than the sum of the radial inner clearance and a diameter of the inner peripheral side surface in the radial direction of said upper casing (12) at a portion of the inner peripheral side surface in the radial direction of said upper casing (12) where the outer lip portion (47) is in contact, is resiliently bent and is brought into contact with the inner peripheral side surface of said upper casing (12).

2. The synthetic resin-made sliding bearing (1) according to claim 1, further comprising: an inner resilient seal member (71) having an inner lip portion (67) which is resiliently bend-deformable and is brought into contact with an outer peripheral side surface in the radial direction of said upper casing (12) so as to allow an inner peripheral portion of the annular space to communicate with the outside between said upper casing (12) and said lower casing (22) and seal an inner peripheral-side clearance formed by mutually opposing surfaces of said upper casing (12) and said lower casing (22),
wherein the inner lip portion (67), which has a minimum diameter which is equal to or less than the difference between a diameter of the outer peripheral side surface in the radial direction of said upper casing (12) at a portion of the outer peripheral side surface in the radial direction of said upper casing (12) where the inner lip portion (67) is in contact and the radial inner clearance, is resiliently bent and is brought into contact with the outer peripheral side surface of said upper casing (12).

3. A synthetic resin-made sliding bearing (1) comprising:
a synthetic resin-made upper casing (12) having an annular lower surface (25) and a cylindrical side surface;
a synthetic resin-made lower casing (22) on which said upper casing (12) is fitted and which has an annular upper surface, defining an annular space extending in a radial direction in cooperation with the annular lower surface (25) of said upper casing (12), and a cylindrical side surface defining a tubular space extending in such a manner as to intersect the radial direction in cooperation with the cylindrical side surface of said upper casing (12);
a sliding bearing member (34) which has a thrust sliding bearing portion (29) disposed in the annular space and a radial sliding bearing portion (33) disposed in the tubular space with a radial inner clearance with respect to said upper casing (12) and said lower casing (22); and
an inner resilient seal member (71) having an inner lip portion (67) which is resiliently bend-deformable and is brought into contact with an outer peripheral side surface in the radial direction of said upper casing (12) so as to allow an inner peripheral portion of the annular space to communicate with an outside between said upper casing (12) and said lower casing (22) and seal an inner peripheral-side clearance formed by mutually opposing surfaces of said upper casing (12) and said lower casing (22),
**characterized in that** the inner lip portion (67), which has a minimum diameter which is equal to or less than the difference between a diameter of the outer peripheral side surface in the radial direction of said upper casing (12) at a portion of the outer peripheral side surface in the radial direction of said upper casing (12) where the inner lip portion (67) is in contact and the radial inner clearance, is resiliently bent and is brought into contact with the outer peripheral side surface of said upper casing (12).

## Patentansprüche

1. Aus Kunstharz hergestelltes Gleitlager (1), umfassend:
ein aus Kunstharz hergestelltes oberes Gehäuse (12), das eine ringförmige untere Fläche (25) und eine zylindrische Seitenfläche aufweist;
ein aus Kunstharz hergestelltes unteres Gehäuse (22), auf dem das obere Gehäuse (12) angebracht ist und das eine ringförmige obere Fläche, die in Zusammenwirkung mit der ringförmigen unteren Fläche (25) des oberen Gehäuses (12) einen sich in radialer Richtung erstreckenden ringförmigen Raum definiert, und eine zylindrische Seitenfläche, die in Zusammenwirkung mit der zylindrischen Seitenfläche des oberen Gehäuses (12) einen rohrförmigen Raum definiert, der sich auf eine Weise erstreckt, um die radiale Richtung zu schneiden;
ein aus Kunstharz hergestelltes Gleitlagerelement (34), das einen in dem ringförmigen Raum angeordneten Axialgleitlagerabschnitt (29) und einen in dem rohrförmigen Raum angeordneten Radialgleitlagerabschnitt (33) mit einem radialen Innenfreiraum in Bezug auf das obere Gehäuse (12) und das untere Gehäuse (22) aufweist; und
ein äußeres elastisches Dichtungselement (51), das einen äußeren Lippenabschnitt (47) aufweist, der elastisch biegeverformbar ist und mit einer inneren Umfangsseitenfläche (44) in der radialen Richtung des oberen Gehäuses (12) in Kontakt gebracht wird, um es einem äußeren Umfangsabschnitt des ringförmigen Raums zu ermöglichen, mit einer Außenseite zwischen dem oberen Gehäuse (12) und dem unteren Gehäuse (22) in Verbindung zu stehen und einen äußeren umfangsseitigen Freiraum abzudichten, der durch einander gegenüberliegende Flächen des oberen Gehäuses (12) und des unteren Gehäuses (22) gebildet wird,
**dadurch gekennzeichnet, dass**
der äußere Lippenabschnitt (47), der einen maximalen Durchmesser aufweist, der gleich wie oder größer als die Summe des radialen Innenfreiraums ist, und einem Durchmesser der inneren Umfangsseitenfläche in radialer Richtung des oberen Gehäuses (12) an einem Abschnitt der inneren Umfangsseitenfläche in radialer Richtung des oberen Gehäuses (12), wo der äußere Lippenabschnitt (47) in Kontakt ist, elastisch gebogen ist und mit der inneren Umfangsseitenfläche des oberen Gehäuses (12) in Kontakt gebracht wird.

2. Aus Kunstharz hergestelltes Gleitlager (1) nach Anspruch 1, ferner umfassend:
ein inneres elastisches Dichtungselement (71), das einen inneren Lippenabschnitt (67) aufweist, der elastisch biegsam verformbar ist und mit einer äußeren Umfangsseitenfläche in radialer Richtung des oberen Gehäuses (12) in Kontakt gebracht wird, um es einem inneren Umfangsabschnitt des ringförmigen Raums zu ermöglichen, mit einer Außenseite zwischen dem oberen Gehäuse (12) und dem unteren Gehäuse (22) in Verbindung zu stehen und einen inneren umfangsseitigen Freiraum abzudichten, der durch einander gegenüberliegende Flächen des oberen Gehäuses (12) und des unteren Gehäuses (22) gebildet wird,
wobei der innere Lippenabschnitt (67), der einen minimalen Durchmesser aufweist, der gleich wie oder kleiner als die Differenz zwischen einem Durchmesser der äußeren Umfangsseitenfläche in der radialen Richtung des oberen Gehäuses (12) an einem Abschnitt der äußeren Umfangsseitenfläche in radialer Richtung des oberen Gehäuses (12) ist, wo der innere Lippenabschnitt (67) in Kontakt ist und der radiale Innenfreiraum, elastisch gebogen ist und mit der äußeren Umfangsseitenfläche des oberen Gehäuses (12) in Kontakt gebracht wird.

3. Aus Kunstharz hergestelltes Gleitlager (1), umfassend:
ein aus Kunstharz hergestelltes oberes Gehäuse (12), das eine ringförmige untere Fläche (25) und eine zylindrische Seitenfläche aufweist;
ein aus Kunstharz hergestelltes unteres Gehäuse (22), auf dem das obere Gehäuse (12) angebracht ist und das eine ringförmige obere Fläche, die in Zusammenwirkung mit der ringförmigen unteren Fläche (25) des oberen Gehäuses (12) einen sich in radialer Richtung erstreckenden ringförmigen Raum definiert, und eine zylindrische Seitenfläche, die in Zusammenwirkung mit der zylindrischen Seitenfläche des oberen Gehäuses (12) einen rohrförmigen Raum definiert, der sich auf eine Weise erstreckt, um die radiale Richtung zu schneiden, aufweist;
ein Gleitlagerelement (34), das einen in dem ringförmigen Raum angeordneten Axialgleitlagerabschnitt (29) und einen in dem rohrförmigen Raum angeordneten Radialgleitlagerabschnitt (33) mit einem radialen Innenfreiraum in Bezug auf das obere Gehäuse (12) und das untere Gehäuse (22) aufweist; und
ein inneres elastisches Dichtungselement (71), das einen inneren Lippenabschnitt (67) aufweist, der elastisch biegeverformbar ist und mit einer äußeren Umfangsseitenfläche in radialer Richtung des oberen Gehäuses (12) in Kontakt gebracht wird, um es einem inneren Umfangsabschnitt des ringförmigen Raums zu ermöglichen, mit einer Außenseite zwischen dem oberen Gehäuse (12) und dem unteren Gehäuse (22) in Verbindung zu stehen und einen inneren umfangsseitigen Freiraum abzudichten, der durch einander gegenüberliegende Flächen des oberen Gehäuses (12) und des unteren Gehäuses (22) gebildet wird,
**dadurch gekennzeichnet, dass**
der innere Lippenabschnitt (67), der einen minimalen Durchmesser aufweist, der gleich wie oder kleiner als die Differenz zwischen einem Durchmesser der äußeren Umfangsseitenfläche in radialer Richtung des oberen Gehäuses (12) an einem Abschnitt der äußeren Umfangsseitenfläche in radialer Richtung des oberen Gehäuses (12), wo der innere Lippenabschnitt (67) in Kontakt ist, und dem radialen Innenfreiraum, elastisch gebogen ist und mit der äußeren Umfangsseitenfläche des oberen Gehäuses (12) in Kontakt gebracht wird.

## Revendications

1. Palier à glissement fait de résine synthétique (1), comprenant.
un boîtier supérieur fait de résine synthétique (12) ayant une surface inférieure annulaire (25) et une surface latérale cylindrique ;
un boîtier inférieur fait de résine synthétique (22) sur lequel ledit boîtier supérieur (12) est ajusté et qui a une surface supérieure annulaire, définissant un espace annulaire s'étendant dans une direction radiale en coopération avec la surface inférieure annulaire (25) dudit boîtier supérieur (12), et une surface latérale cylindrique définissant un espace tubulaire s'étendant de manière telle à intersecter la direction radiale en coopération avec la surface latérale cylindrique dudit boîtier supérieur (12) ;
un élément de palier à glissement fait de résine synthétique (34) qui a une partie de palier à glissement de butée (29) disposée dans l'espace annulaire et une partie de palier à glissement radiale (33) disposée dans l'espace tubulaire avec un j eu intérieur radial par rapport audit boîtier supérieur (12) et audit boîtier inférieur (22) ; et
un élément d'étanchéité résilient extérieur (51) ayant une partie à lèvre extérieure (47) qui est déformable par flexion de façon résiliente et est mise en contact avec une surface latérale périphérique intérieure (44) dans la direction radiale dudit boîtier supérieur (12) afin de permettre à une partie périphérique extérieure de l'espace annulaire de communiquer avec un extérieur entre ledit boîtier supérieur (12) et ledit boîtier inférieur (22) et d'étanchéifier un jeu côté périphérique extérieur formé par des surfaces mutuellement opposées dudit boîtier supérieur (12) et dudit boîtier inférieur (22),
**caractérisé en ce que**
dans lequel la partie à lèvre extérieure (47), qui a un diamètre maximum qui est égal ou supérieur à la somme du jeu intérieur radial et d'un diamètre de la surface latérale périphérique intérieure dans la direction radiale dudit boîtier supérieur (12) au niveau d'une partie de la surface latérale périphérique intérieure dans la direction radiale dudit boîtier supérieur (12) où la partie à lèvre extérieure (47) est en contact, est fléchie de façon résiliente et est mise en contact avec la surface latérale périphérique intérieure dudit boîtier supérieur (12).

2. Palier à glissement fait de résine synthétique (1) selon la revendication 1, comprenant en outre :
un élément d'étanchéité résilient intérieur (71) ayant une partie à lèvre intérieure (67) qui est déformable par flexion de façon résiliente et est mise en contact avec une surface latérale périphérique extérieure dans la direction radiale dudit boîtier supérieur (12) afin de permettre à une partie périphérique intérieure de l'espace annulaire de communiquer avec l'extérieur entre ledit boîtier supérieur (12) et ledit boîtier inférieur (22) et d'étanchéifier un jeu côté périphérique intérieur formé par des surfaces mutuellement opposées dudit boîtier supérieur (12) et dudit boîtier inférieur (22),
dans lequel la partie à lèvre intérieure (67), qui a un diamètre minimum qui est égal ou inférieur à la différence entre un diamètre de la surface latérale périphérique extérieure dans la direction radiale dudit boîtier supérieur (12) au niveau d'une partie de la surface latérale périphérique extérieure dans la direction radiale dudit boîtier supérieur (12) où la partie à lèvre intérieure (67) est en contact et le jeu intérieur radial, est fléchie de façon résiliente et est mise en contact avec la surface latérale périphérique extérieure dudit boîtier supérieur (12).

3. Palier à glissement fait de résine synthétique (1), comprenant :
un boîtier supérieur fait de résine synthétique (12) ayant une surface inférieure annulaire (25) et une surface latérale cylindrique ;
un boîtier inférieur fait de résine synthétique (22) sur lequel ledit boîtier supérieur (12) est ajusté et qui a une surface supérieure annulaire, définissant un espace annulaire s'étendant dans une direction radiale en coopération avec la surface inférieure annulaire (25) dudit boîtier supérieur (12), et une surface latérale cylindrique définissant un espace tubulaire s'étendant de manière telle à intersecter la direction radiale en coopération avec la surface latérale cylindrique dudit boîtier supérieur (12) ;
un élément de palier à glissement (34) qui a une partie de palier à glissement de butée (29) disposée dans l'espace annulaire et une partie de palier à glissement radiale (33) disposée dans l'espace tubulaire avec un jeu intérieur radial par rapport audit boîtier supérieur (12) et audit boîtier inférieur (22) ; et
un élément d'étanchéité résilient intérieur (71) ayant une partie à lèvre intérieure (67) qui est déformable par flexion de façon résiliente et est mise en contact avec une surface latérale périphérique extérieure dans la direction radiale dudit boîtier supérieur (12) afin de permettre à une partie périphérique intérieure de l'espace annulaire de communiquer avec un extérieur entre ledit boîtier supérieur (12) et ledit boîtier inférieur (22) et d'étanchéifier un jeu côté périphérique intérieur formé par des surfaces mutuellement opposées dudit boîtier supérieur (12) et dudit boîtier inférieur (22),
**caractérisé en ce que**
dans lequel la partie à lèvre intérieure (67), qui a un diamètre minimum qui est égal ou inférieur à la différence entre un diamètre de la surface latérale périphérique extérieure dans la direction radiale dudit boîtier supérieur (12) au niveau d'une partie de la surface latérale périphérique extérieure dans la direction radiale dudit boîtier supérieur (12) où la partie à lèvre intérieure (67) est en contact et le jeu intérieur radial, est fléchie de façon résiliente et est mise en contact avec la surface latérale périphérique extérieure dudit boîtier supérieur (12).
